# FASCICULE DE BREVET EUROPEEN

(11) **EP 1 741 587 B1**
(45) Date de publication et mention de la délivrance du brevet: **24.09.2008**
(21) Numéro de dépôt: 06116734.2
(22) Date de dépôt: 06.07.2006
(51) Int. Cl.: B60J 7/00

(54) **Dispositif d'occultation d'un pavillon de véhicule et véhicule correspondant**
Sonnenschutzsystem für ein Fahrzeugdach und dazugehöriges Fahrzeug
Sunshade system for vehicle roof and corresponding vehicle

(30) Priorité: 08.07.2005 FR 0507354
(43) Date de publication de la demande: 10.01.2007
(73) Titulaire: Wagon SAS, 79302 Bressuire Cédex (FR)
(72) Inventeur: Fourel, Pascal, 35400 SAINT-MALO (FR)
(74) Mandataire: Bioret, Ludovic

(56) Documents cités:
- EP-A- 1 495 889
- DE-A1- 10 306 951
- US-A1- 2004 160 082

## Description

Le domaine de l'invention est celui de l'occultation de surfaces vitrées d'un véhicule automobile, et notamment de surfaces vitrées correspondant au pavillon et/ou à la partie supérieure du pare-brise de ce dernier. Plus précisément, l'invention concerne les dispositifs mettant en oeuvre une toile d'occultation mobile entre au moins une position repliée et au moins une position dépliée, en particulier pour un pavillon et/ou un pare-brise de véhicule.

De façon assez répandue, les pavillons des véhicules automobiles sont pourvus d'une baie et/ou d'une ouverture vitrée. Dans d'autres cas, le pare-brise est agrandi, par rapport aux véhicules classiques. Les deux caractéristiques peuvent d'ailleurs être combinées, pour fournir une grande surface vitrée.

La tendance actuelle est en effet de proposer des véhicules automobiles présentant de plus en plus de surfaces vitrées. On cherche donc à augmenter tant que faire se peut la surface des vitres latérales, des pare-brises et des lunettes arrière, et également des pavillons.

On développe également des pavillons intégralement, ou essentiellement, vitrés, et ne faisant qu'un, au moins visuellement, avec le pare-brise (absence d'un élément de carrosserie extérieur entre les deux).

Les objectifs de ces développements sont notamment d'offrir :
- une meilleure visibilité pour les occupants du véhicule ;
- une luminosité accrue à l'intérieur du véhicule ;
- une sensation d'espace élargi pour les occupants ;
- une amélioration esthétique générale du véhicule ;
- ...

Diverses solutions ont été proposées pour limiter le passage des rayons du soleil, notamment en utilisant des vitres teintées ou en rapportant un motif filtrant sur la vitre par sérigraphie.

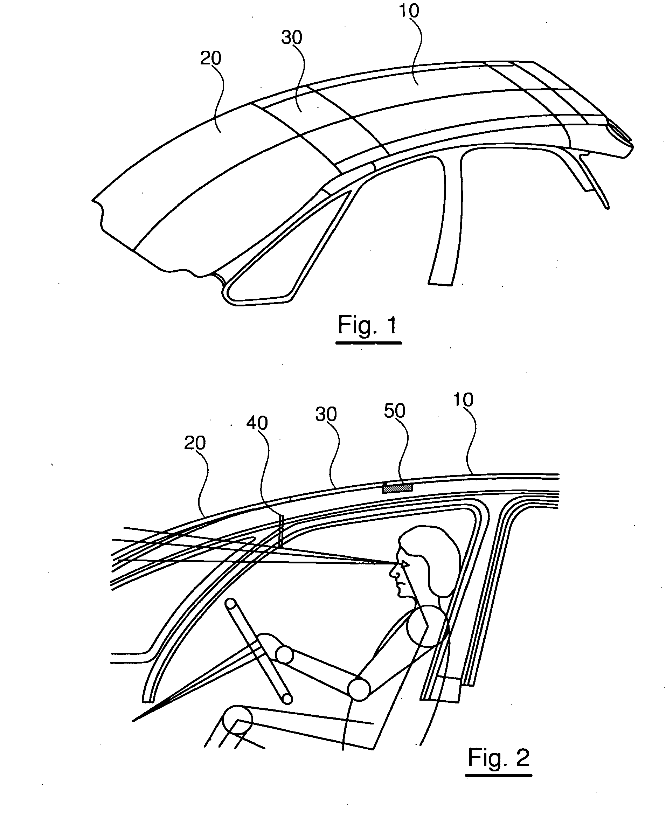

Les figures 1 et 2 illustrent ainsi un véhicule de ce type, sur lequel il est prévu une surface vitrée quasi continue, englobant le pare-brise et le pavillon. Selon ce mode de réalisation, le véhicule comprend un pavillon vitré 10 et un pare-brise 20 se prolongeant par l'intermédiaire d'un panneau vitré intermédiaire 30 en direction du pavillon pour rejoindre celui-ci de façon sensiblement coplanaire et affleurante. Le panneau intermédiaire est bien sûr optionnel, le pare-brise et le pavillon pouvant être configurés pour couvrir toute la surface.

L'invention s'applique en particulier, mais non exclusivement, à ce type de véhicule.

De façon connue, comme montré par example dans le document EP 1 495 889, les véhicules automobiles sont généralement équipés de palettes pare-soleil mobiles 40 classiquement montées au voisinage de la partie supérieure du pare-brise, approximativement dans la position représentée sur la figure 2.

Sur les véhicules avec pare-brise classiques, ces palettes pare-soleil sont montées sur un élément de carrosserie au voisinage du bord supérieur du pare-brise, de façon à être mobiles en rotation entre une position rabattue contre le pavillon et une position rabaissée vers le pare-brise pour protéger les yeux du conducteur et/ou du passager avant contre le rayonnement du soleil.

Une technique particulière a été présentée par le demandeur dans le document FR-2 850 061. Selon cette technique, on prévoit une toile d'occultation de pavillon, qui se prolonge au-delà du pavillon, pour occulter la partie supérieure du pare-brise.

Un inconvénient de cette technique est que le prolongement de la toile n'est pas bien maintenu, et a tendance à bouger lorsque le véhicule est en mouvement.

En outre, il n'est pas facile de régler la position de ce prolongement, en fonction de la position du soleil et/ou des besoins de l'utilisateur.

L'invention a notamment pour objectif de pallier ces inconvénients de l'art antérieur.

Plus précisément, un objectif de l'invention est de fournir une technique d'occultation d'une surface vitrée correspondant à la partie supérieure d'un pare-brise et/ou d'un pavillon vitré, qui assure également de façon efficace une fonction de pare-soleil, de façon simple, esthétique et ergonomique.

Un autre objectif de l'invention est de fournir une telle technique, qui soit simple à installer et à mettre en oeuvre.

L'invention a également pour objectif de fournir une telle technique, qui soit adaptée à l'esthétique et à l'ergonomie des véhicules à pavillon vitré, et notamment des véhicules décrits précédemment, présentant une surface vitrée continue entre le pare-brise et le pavillon.

Encore un autre objectif de l'invention est de fournir une telle technique, qui offre une fonction de pare-soleil réglable.

Ces objectifs, ainsi que d'autres qui apparaîtront par la suite, sont atteints à l'aide d'un dispositif d'occultation d'un pavillon vitré et/ou d'une partie supérieure d'un pare-brise d'un véhicule automobile, comprenant au moins une toile d'occultation mobile entraînée par une barre de tirage entre au moins une position repliée et au moins une position dépliée, ladite barre de tirage portant au moins une palette pare-soleil articulée par rapport à ladite barre de tirage.

Selon l'invention, ladite toile de tirage est guidée le long de deux rails de guidage, et au moins un desdits rails porte un prolongement articulé, comprenant un logement de maintien dans lequel vient se loger un bord de ladite palette pare-soleil, lorsque ladite toile d'occultation est dans la position dépliée.

On obtient ainsi un système simple et efficace. Ces prolongements permettent en effet d'une part de maintenir la palette, et d'autre part de régler sa position.

A cette fin, ledit prolongement présente avantageusement un élément de préhension, permettant à un utilisateur de modifier l'inclinaison dudit prolongement par rapport au pare-brise du véhicule.

Selon un mode de réalisation avantageux, ledit prolongement peut prendre au moins deux positions d'inclinaison indexés.

Dans ce cas, ledit prolongement peut porter un crantage définissant lesdites positions indexées.

De façon avantageuse, ledit rail peut alors porter un doigt de verrouillage de l'inclinaison, coopérant avec le crantage dudit prolongement. Ledit doigt est préférentiellement accouplé à des moyens de rappel tendant à le ramener dans une position de verrouillage.

Selon un mode de réalisation avantageux de l'invention, le dispositif comprend une barre de tirage unique portant deux palettes pare-soleil mobiles en rotation de façon indépendante.

Dans un mode de réalisation particulier, chacune desdites palettes pare-soleil est formée d'un cadre à l'intérieur duquel est tendue une toile occultante.

Selon un autre aspect de l'invention, au moins une desdites palettes pare-soleil porte une extension mobile en coulissement et/ou en rotation, destinée à occulter une zone complémentaire non couverte par ladite palette.

L'invention concerne également les véhicules automobiles équipés de tels dispositifs.

D'autres caractéristiques et avantages de l'invention apparaîtront plus clairement à la lecture de la description suivante d'un mode de réalisation préférentiel de l'invention, donnée à titre de simple exemple illustratif et non limitatif, et des dessins annexés parmi lesquels :
- les figures 1 et 2, discutées en préambule, sont des vues respectivement en perspective et en coupe d'un véhicule destiné à être équipé d'un dispositif d'occultation selon l'invention ;
- les figures 3A et 3B présentent le véhicule des figures 1 et 2, lorsque la toile d'occultation est repliée et dépliée respectivement ;
- la figure 4 illustre le dispositif de l'invention en position dépliée, vu de l'intérieur du véhicule ;
- la figure 5 est une vue détaillée d'un mode de réalisation particulier du prolongement selon l'invention ;
- la figure 6 présente un autre mode de réalisation d'un prolongement ;
- la figure 7 illustre le principe de l'indexation du prolongement de la figure 6 ;
- les figures 8 à 14 présentent diverses vues de variantes, pour la réalisation des prolongements selon l'invention ;
- la figure 15 illustre la solidarisation d'une palette à la barre de tirage ;
- la figure 16 présente un prolongement monté sur le véhicule, à l'extrémité du rail ;
- la figure 17 est une variante de la figure 4, avec une autre forme de prolongement ;
- la figure 18 illustre un moyen de solidarisation des deux palettes.

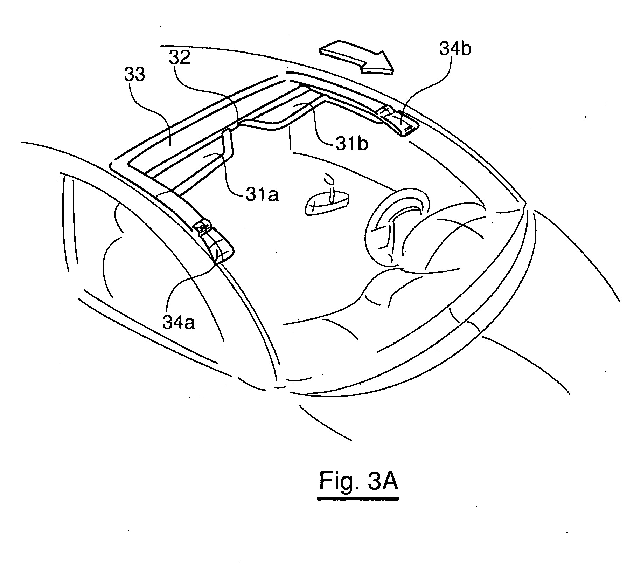

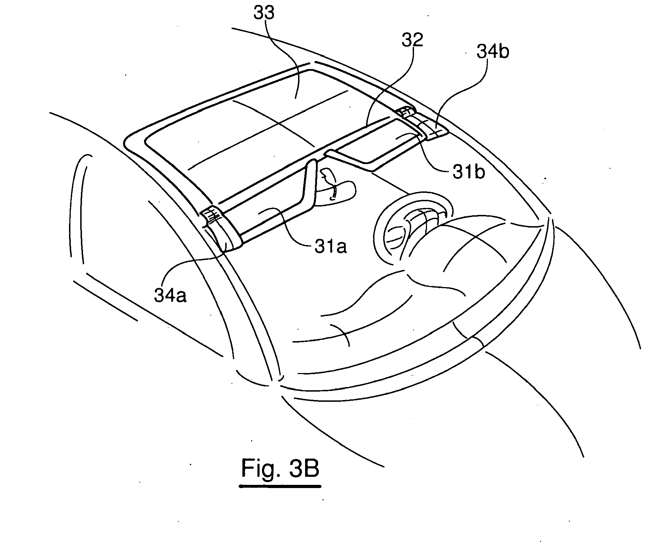

L'invention repose donc sur une approche nouvelle de la combinaison des fonctions « store d'occultation » et « palettes pare-soleil ». Comme illustré par les figures 3A et 3B, ces dernières 31a, 31b sont solidaires de la barre de tirage 32 de la toile d'occultation 33, montée par exemple sur un tube enrouleur (non représenté).

Les palettes 31a et 31b restent dans le prolongement de la toile 33 (en position repliée (figure 3A ; le dépliement ayant cependant débuté) ou en position dépliée (figure 3B). Elles peuvent être guidées dans les rails qui guident également la barre de tirage 32.

A l'extrémité de ces rails, c'est-à-dire à l'emplacement où la barre de tirage vient en butée en position dépliée, sont prévus selon l'invention des prolongements 34a, 34b, qui peuvent recevoir le bord latéral de chacune des palettes 31a, 31b respectivement (figure 3A).

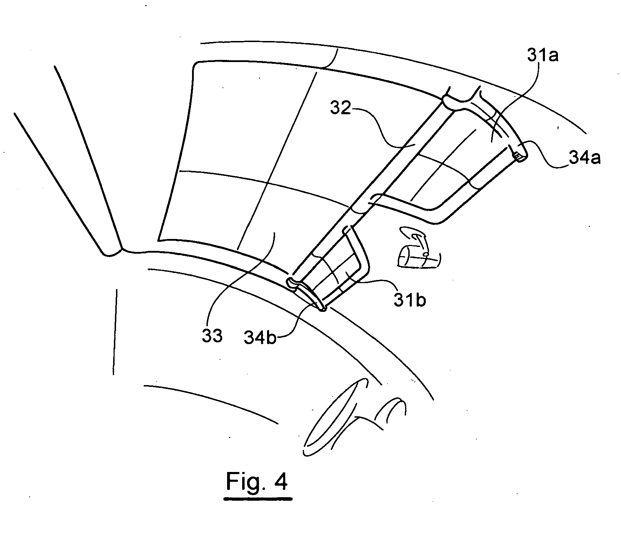

Ces prolongements 34a et 34b sont mobiles en rotation, de façon à pouvoir régler l'inclinaison de la palette correspondante par rapport au pare-brise. Comme on peut le noter sur la figure 4, le réglage peut être indépendant pour les deux palettes 31a, 31b, celles-ci étant mobiles indépendamment l'une de l'autre en rotation autour de la barre de tirage 32.

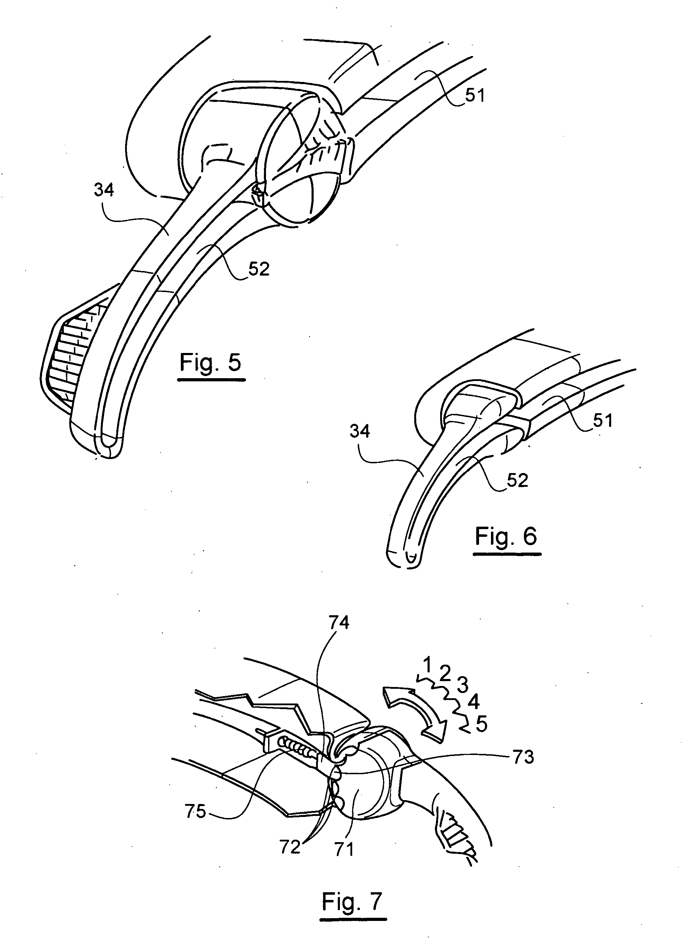

La figure 5 montre plus précisément la structure d'un tel prolongement. Il est monté articulé par rapport au rail 51, et présente une fente 52 définie pour recevoir et maintenir le bord de la palette.

Une poignée 53 est prévue, pour faciliter la manipulation. Dans un autre mode de réalisation, illustré par la figure 6, il n'y a pas de poignée spécifique, et c'est le corps du prolongement 31 qui assure cette fonction.

La figure 7 présente un mode de fonctionnement avantageux pour la poignée de la figure 5. La partie 71 montée sur l'axe de rotation présente une série d'indentations 72, ou de crans, définissant une indexation, par exemple pour 5 positions d'inclinaison.

Un doigt 73 est monté au voisinage du rail. Il est mobile en coulissement, entre une position par défaut de verrouillage, dans laquelle le doigt 73 coopère avec le cran 72, et maintient le prolongement dans la position souhaitée, et une position de libération, dans laquelle le doigt est dégagé du cran, permettant à un utilisateur de modifier l'inclinaison de la poignée.

Le passage de la position de verrouillage à la position de libération se fait par l'actionnement d'un poussoir 74 solidaire du doigt 73. Un ressort de rappel 75 agit sur ledit doigt pour que, par défaut, il prenne la position verrouillée, de façon que la palette soit maintenue immobile.

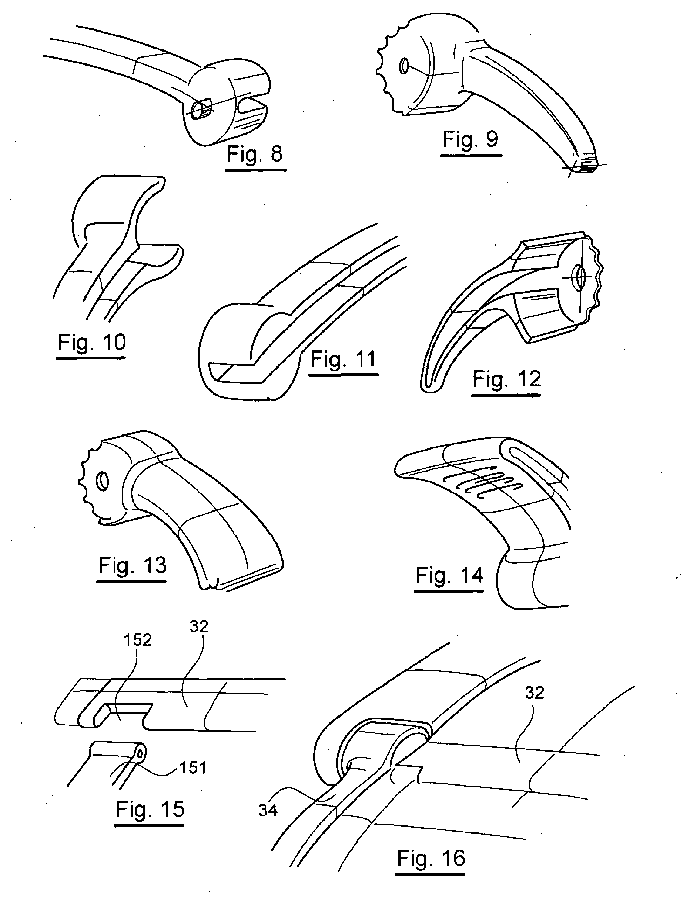

Les figures 8 à 14 illustrent différentes variantes pour les prolongements, tous présentent des aspects spécifiques de réalisation et de mise en oeuvre.

Sur la figure 15, on montre un exemple de solidarisation en rotation de la palette à la barre de tirage 32. Un élément de liaison 151 (deux sont prévus pour chaque palette) s'insère dans un logement 152 prévu à cet effet.

La figure 16 montre la barre de tirage 32 venant en butée contre le prolongement 34, en position dépliée.

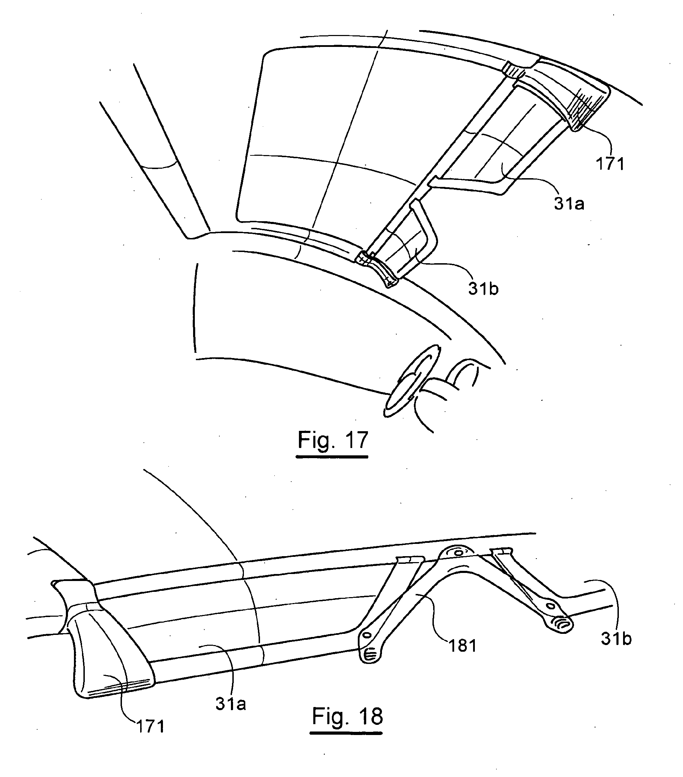

Sur la figure 17, on a représenté un autre type de prolongement 171, présentant une surface relativement importante. Il est conçu pour occulter la zone qui ne serait pas couverte par la palette, dans le cas d'une surface vitrée s'élargissant vers l'avant du véhicule, et pour laquelle les rails de guidage de la toile ne sont pas parallèles.

La figure 18 présente un moyen de liaison 181 permettant de solidariser les deux palettes 31a et 31b. Ce moyen de liaison peut être amovible.

Les palettes peuvent être classiquement pleines, ou présenter un cadre à l'intérieur duquel est tendue une toile. Par ailleurs, la toile d'occultation peut être remplacée par deux toiles indépendantes, de chaque côté du véhicule. Dans ce cas, on prévoit deux barres de tirage, portant chacune une palette.

## Revendications

1. Dispositif d'occultation d'un pavillon vitré (10) et/ou d'une partie supérieure d'un pare-brise (20) d'un véhicule automobile, comprenant au moins une toile d'occultation (33) mobile entraînée par une barre de tirage (32) entre au moins une position repliée et au moins une position dépliée, ladite barre de tirage (32) portant au moins une palette pare-soleil (31) articulée par rapport à ladite barre de tirage (32),
**caractérisé en ce que** ladite barre de tirage (32) est guidée le long de deux rails de guidage (51), et **en ce qu'**au moins un desdits rails porte un prolongement articulé (34), comprenant un logement de maintien (52) dans lequel vient se loger un bord de ladite palette pare-soleil (31), lorsque ladite toile d'occultation (33) est dans la position dépliée.

2. Dispositif d'occultation selon la revendication 1, **caractérisé en ce que** ledit prolongement présente un élément de préhension, permettant à un utilisateur de modifier l'inclinaison dudit prolongement par rapport au pare-brise du véhicule.

3. Dispositif d'occultation selon l'une quelconque des revendications 1 et 2, **caractérisé en ce que** ledit prolongement peut prendre au moins deux positions d'inclinaison indexés.

4. Dispositif d'occultation selon la revendication 3, **caractérisé en ce que** ledit prolongement porte un crantage (72) définissant lesdites positions indexées.

5. Dispositif d'occultation selon la revendication 4, **caractérisé en ce que** ledit rail porte un doigt de verrouillage (73) de l'inclinaison, coopérant avec le crantage (72) dudit prolongement.

6. Dispositif d'occultation selon la revendication 5, **caractérisé en ce que** ledit doigt (73) est accouplé à des moyens de rappel (75) tendant à le ramener dans une position de verrouillage.

7. Dispositif d'occultation selon l'une quelconque des revendications des revendications 1 à 6, **caractérisé en ce qu'**il comprend une barre de tirage (32) unique portant deux palettes pare-soleil (31a, 31b) mobiles en rotation de façon indépendante.

8. Dispositif d'occultation selon l'une quelconque des revendications 1 à 7, **caractérisé en ce que** chacune desdites palettes pare-soleil est formée d'un cadre à l'intérieur duquel est tendue une toile occultante.

9. Dispositif d'occultation selon l'une quelconque des revendications 1 à 8, **caractérisé en ce qu'**au moins une desdites palettes pare-soleil porte une extension mobile en coulissement et/ou en rotation, destinée à occulter une zone complémentaire non couverte par ladite palette.

10. Véhicule automobile comprenant un dispositif d'occultation de son pavillon vitré et/ou d'une partie supérieure de son pare-brise, comprenant au moins une toile d'occultation mobile entraînée par une barre de tirage entre au moins une position repliée et au moins une position dépliée, ladite barre de tirage portant au moins une palette pare-soleil articulée par rapport à ladite barre de tirage
**caractérisé en ce qu'**il comprend deux rails de guidage (51) guidant ladite barre de tirage (32) et **en ce qu'**au moins un desdits rails porte un prolongement articulé (34), comprenant un logement de maintien (52) dans lequel vient se loger un bord de ladite palette pare-soleil (31), lorsque ladite toile d'occultation (33) est dans la position dépliée.

## Claims

1. Device for screening a glass roof (10) and/or an upper part of a windscreen (20) of a motor vehicle, comprising at least one mobile fabric screen (33) which is driven by a draw bar (32) between at least one folded-back position and at least one unfolded position, said draw bar (32) bearing at least one sun visor (31) which is articulated relative to said draw bar (32),
**characterised in that** said draw bar (32) is guided along two guide rails (51), and **in that** at least one of said rails bears an articulated extension (34), comprising a retention receptacle (52) in which an edge of said sun visor (31) is accommodated when said fabric screen (33) is in the unfolded position.

2. Screening device according to claim 1, **characterised in that** said extension has a gripping element, which allows a user to modify the inclination of said extension relative to the windscreen of the vehicle.

3. Screening device according to one of claims 1 and 2, **characterised in that** said extension can take at least two indexed inclination positions.

4. Screening device according to claim 3, **characterised in that** said extension bears a serration (72) which defines said indexed positions.

5. Screening device according to claim 4, **characterised in that** said rail bears a finger (73) to lock the inclination, which co-operates with the serration (72) of said extension.

6. Screening device according to claim 5, **characterised in that** said finger (73) is coupled to return means (75) which tend to return it to a locking position.

7. Screening device according to any one of claims 1 to 6, **characterised in that** it comprises a single draw bar (32) which bears two sun visors (31a, 31b) which are mobile in rotation independently.

8. Screening device according to any one of claims 1 to 7, **characterised in that** each of said sun visors is formed by a frame, inside which a fabric screen is stretched.

9. Screening device according to any one of claims 1 to 8, **characterised in that** at least one of said sun visors bears an extension which is mobile in sliding and/or in rotation, and is designed to screen an additional area which is not covered by said visor.

10. Motor vehicle, comprising a device for screening of its glass roof and/or an upper part of its windscreen, comprising at least one mobile fabric screen which is driven by a draw bar between at least one folded-back position and at least one unfolded position, said draw bar bearing at least one sun visor which is articulated relative to said draw bar,
**characterised in that** it comprises two guide rails (51) which guide said draw bar (32), and **in that** at least one of said rails bears an articulated extension (34), comprising a retention receptacle (52) in which an edge of said sun visor (31) is accommodated, when said fabric screen (33) is in the unfolded position.

## Patentansprüche

1. Abdeckeinrichtung für ein verglastes Fahrzeugdach (10) und/oder für den oberen Teil einer Windschutzscheibe (20) eines Fahrzeugs, die zumindest einen beweglichen Abdeckstoff (33) umfasst, der von einer Zugstange (32) zwischen mindestens einer eingezogenen und mindestens einer ausgezogenen Stellung bewegt wird, wobei an der Zugstange (32) zumindest eine Sonnenblende (31) sitzt, die an der Zugstange (32) angelenkt ist,
**dadurch gekennzeichnet, dass**
diese Zugstange (32) in zwei Führungsschienen (51) geführt ist und dass mindestens eine dieser Schienen eine Gelenkverlängerung (34) besitzt, die eine Aufnahme (52) umfasst, in der sich eine Kante der genannten Sonnenblende (31) legt, wenn der bewegliche Abdeckstoff (33) in der ausgezogenen Stellung ist.

2. Abdeckeinrichtung nach Anspruch 1,
**dadurch gekennzeichnet, dass**
die Verlängerung ein Greifelement besitzt, mit dem ein Benutzer die Neigung dieser Verlängerung gegenüber der Windschutzscheibe des Fahrzeugs verändern kann.

3. Abdeckeinrichtung nach einem der Ansprüche 1 und 2,
**dadurch gekennzeichnet, dass**
die genannte Verlängerung mindestens zwei vorgegebene Neigungspositionen einnehmen kann.

4. Abdeckeinrichtung nach Anspruch 3,
**dadurch gekennzeichnet, dass**
die genannte Verlängerung eine Raste (72) besitzt, die diese vorgegebenen Positionen definiert.

5. Abdeckeinrichtung nach Anspruch 4,
**dadurch gekennzeichnet, dass**
die Schiene einen Finger (73) zur Verriegelung der Neigung besitzt, der mit der Raste (72) der Verlängerung zusammenwirkt.

6. Abdeckeinrichtung nach Anspruch 5,
**dadurch gekennzeichnet, dass**
der genannte Finger (73) mit Rückholmitteln (75) verbunden ist, die die Tendenz haben, ihn in eine verriegelte Stellung zu bringen.

7. Abdeckeinrichtung nach einem der Ansprüche von 1 bis 6,
**dadurch gekennzeichnet, dass**
es eine einzige Zugstange (32) umfasst, auf der sich zwei unabhängig voneinander drehbare Sonnenblenden (31 a, 31 b) befinden.

8. Abdeckeinrichtung nach einem der Ansprüche von 1 bis 7,
**dadurch gekennzeichnet, dass**
jede dieser Sonnenblenden aus einem Rahmen besteht, in dem ein beweglicher Abdeckstoff gespannt ist.

9. Abdeckeinrichtung nach einem der Ansprüche von 1 bis 8,
**dadurch gekennzeichnet, dass**
mindestens eine dieser Sonnenblenden eine verschiebbare und/oder drehbare Erweiterung zur Beschattung eines zusätzlichen Bereichs, der von der genannten Sonnenblende nicht abgedeckt ist, besitzt.

10. Fahrzeug mit einer Abdeckeinrichtung für ein verglastes Fahrzeugdach und/oder für den oberen Teil seiner Windschutzscheibe, die zumindest einen beweglichen Abdeckstoff umfasst, der von einer Zugstange zwischen mindestens einer eingezogenen und mindestens einer ausgezogenen Stellung bewegt wird, wobei an der Zugstange zumindest eine Sonnenblende sitzt, die an der Zugstange angelenkt ist,
**dadurch gekennzeichnet, dass**
sie zwei Führungsschienen (51) zur Führung dieser Zugstange (32) umfasst und dass mindestens eine dieser Schienen eine Gelenkverlängerung (34) besitzt, die eine Aufnahme (52) umfasst, in der sich eine Kante der Sonnenblende (31) legt, wenn der bewegliche Abdeckstoff (33) in der ausgezogenen Stellung ist.
